# EUROPEAN PATENT APPLICATION

(11) **EP 4 524 872 A1**
(43) Date of publication of application: **19.03.2025**
(21) Application number: 24200594.0
(22) Date of filing: 16.09.2024
(51) Int. Cl.: G06Q 90/00, G06F 3/01

(54) **DEVICE FOR PRESENTING AND VISUALIZING OBJECTS, METHOD OF PRESENTING AND VISUALIZING OBJECTS**

(30) Priority: 16.09.2023 PL 44614523
(71) Applicant: Digi Progress Sp.z o.o., Rzeszów (PL)
(72) Inventor: KORDOS, Damian, 35-330 Rzeszów (PL); KORDOS, Adrian, 35-601 Rzeszów (PL); KOZIO , Lucjan, 39-320 PRZEC AW (PL); WIELOPOLSKI, Grzegorz, 39-120 S DZISZÓW MA OPOLSKI (PL)
(74) Representative: Tyrala, Magdalena

(57) **Abstract**

A device for presenting and visualizing objects, comprising at least one display (1) intended to accommodate one or more objects (3); at least one control system comprising a microcontroller/computer/logical unit (5), with implemented software (11), to which at least one object sensor (4) (3) and at least one display (6) are connected, characterized in that it comprises a system for detecting the presence of objects (3) in the display (1) implemented by a system of graphic code sensor(s) (8) and/or optical sensor( s) (14) connected to the control system (5) and/or a vision system comprising a camera(s) (12) oriented towards the display (1) with the object( s) (3) and/or RFID reader(s) (9) contained in the display (1) and the tags (4) contained in/on the objects (3), and in that it comprises software (11) implemented in the microcontroller/computer/logical unit (5), which is connected to the display (6), wherein the software (11) is configured to generate images containing the objects (3) or parts thereof, or other information and visualizations related to this/these object/ s on the display (6). The generation of images or fragments thereof may take place on an external server (13) and downloaded to the control system (5) for display on the display (6). The method according to the invention consists in using a device for presenting objects and generating images on the display (6) presenting objects (3) or fragments thereof.

## Description

The subject of the invention is a device for presenting and visualizing objects, e.g. goods or their samples, miniatures, etc., comprising an object display and a display. The subject of the invention is also a method for presenting and visualizing objects and a method for obtaining data on customer behavior and preferences using this device.

In the state of the art, static displays presenting goods or their samples are known. The usefulness of such displays is significantly limited. A potential customer, in order to match products to themselves, must physically grab them and compare them. And in the case of samples, the end effect of using the products can only be generated in the customer's imagination.

There are also known displays in the form of screens that display the image of the product and information about it, such as size, weight, availability, suggestions for use or arrangement, which are basically electronic product catalogs. The usefulness of these displays is also limited. The final effect of the product or use of the product is also unknown in this case and requires the use of the user's or customer's imagination.

The aim of the invention is to provide a device that would provide the user with the maximum amount of information about the product as well as enable the visualization of many products in a pre-defined arrangement. The aim of the invention is to develop a method of presenting products that enables the visualization of many products in a pre-defined arrangement.

The essence of the invention is a device for presenting and visualizing objects comprising at least one display, intended for placing one or more objects on it, at least one control system comprising a microcontroller/computer/logical unit, with implemented software, to which at least one object sensor and at least one display are connected. The device is characterized in that it comprises a system recognizing the object implemented by an optical sensor system connected to the control system and/or a vision system comprising a camera or cameras oriented towards the display with the object/ s and/or an RFID reader, contained in the display and appropriate markers contained in or on the objects or detecting a natural feature of the objects, and in that it comprises software implemented in the control system, which is connected to the display, wherein the software is configured to generate images containing the presented objects or parts thereof on the display and/or other information and visualizations associated with this object (3).

Preferably, the display additionally includes a touch screen with an implemented user interface which is connected to the control system.

Preferably, the object/s recognition system is implemented by an optical sensor and a marker located on the object, the marker being a barcode or a QR code or another graphic code. Preferably, the object/s recognition system is implemented by a radio reader and a radio tag located on/in the object, preferably in the RFID standard.

Preferably, the device includes a wireless and/or wired communication module connected to the control system.

Preferably, the software includes an image database including a plurality of layers or a plurality of image fragments of the resulting graphics, wherein each layer or image fragment includes an image representing the object or a fragment thereof.

Advantageously, the software may retrieve data from an external imaging database containing layers or image fragments of the resulting graphics, wherein each layer or image fragment contains an image representing the object or a fragment thereof.

Preferably, the device is supplemented with an external server generating visualizations locating the products presented by the objects and preferably the device enables downloading and displaying on the display the visualization generated on the external server.

The essence of the invention is also a method of presenting and visualizing objects, in which a display is provided, comprising at least one control system comprising a microcontroller/computer/logical unit, with implemented software; a system recognizing the object implemented by an optical sensor system connected to the control system and/or a vision system comprising a camera or cameras oriented towards the display with the object/ s and/or a reader/system of RFID readers, contained in the display and appropriate tags contained in/on the objects or detecting a natural feature of the objects, and in that it comprises software implemented in the control system, which is connected to the display, wherein the software is configured to generate images or enable downloading generated images to an external server containing the presented objects or fragments thereof and displayed on the display, wherein in the following steps:
a. the user places/ reads one or more objects on one or more displays,
b. the sensor/s and/or reader/ s and/or image recognition system with camera/ s recognizes the object,
c. the recognized data about an object or multiple objects are sent to the control system or an external server,
d. data about an object or multiple objects are processed in the control system by software or downloaded from an external server,
e. the processed data is sent to the display, which displays a visualization image presenting the object(s) or its fragment(s).

Preferably, according to the method, an additional touch screen is provided which includes an interface allowing a user to communicate with a microcontroller/computer/logical unit and software, and the method includes a further step in which the user uses the touch screen interface to send his/her messages and receive messages generated by the software.

Preferably, the recognition of an object on the display is performed by a vision system comprising one or more cameras oriented to a defined area of the display, which, in connection with an appropriately programmed microcontroller/computer/logical unit, recognizes individual objects.

Preferably, for recognizing an object, a system is provided comprising an optical sensor(s) detecting and recognizing tags placed on individual objects, preferably the tag is a bar code or a QR code or another graphic code.

Preferably, for recognizing an object, a system is provided comprising an optical sensor(s) for detecting and recognizing characteristic features of individual objects.

In another preferred embodiment, a system based on radio frequency identification technology, preferably RFID tags and reader(s), is provided for object recognition .

In a further preferred embodiment, the display is provided additionally comprising a wireless and/or wired communication system, and the signals generated by the software and the microcontroller/computer/logical unit are transmitted to external or internal devices or systems comprising appropriate communication devices, and the communication system receives signals transmitted to it from other, external or internal devices and then transmits them to the microcontroller/computer/logical unit.

Unlike currently used displays, the submitted invention detects the type of object that is of current interest to the customer by placing it in a defined area or reading it at the display.

The invention provides visualization in a given arrangement of objects, products or templates with which a person interacts by placing them in a defined area or reading a template. The user has the ability to see in real time how a given object will look in the arrangement on its own or in combination with other objects. The Client is not required to know how to use graphic programs or design programs.

The device and method according to the invention also reduce, exponentially, the number of graphics necessary to prepare the presentation of all possible visualizations containing products. For example: if the display contains 20 products of one type and 30 of the other type and all products can be placed in 10 ways (different room), the classic system must contain a database containing 20x30x10 = 6000 graphics, while in the proposed solution it is 20x10+30x10=500 graphics. Individual layers or fragments of the displayed image will change dynamically during interaction with the customer, creating new result graphics, without the need to replace the entire image. The generated visualization may be subject to further processing or modification.

The invention is shown in the drawing, where:
Fig 1. shows an example presentation device.
Fig. 2. shows a diagram of the presentation device.
Fig. 3 shows an example of a product arrangement visualization layer layout using a device and a visualization program.
Fig. 4 shows the composition of layers into the finished visualization.

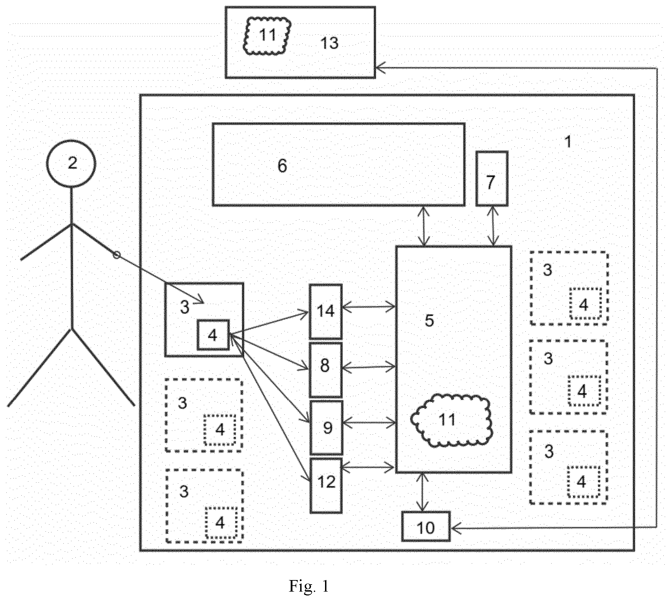

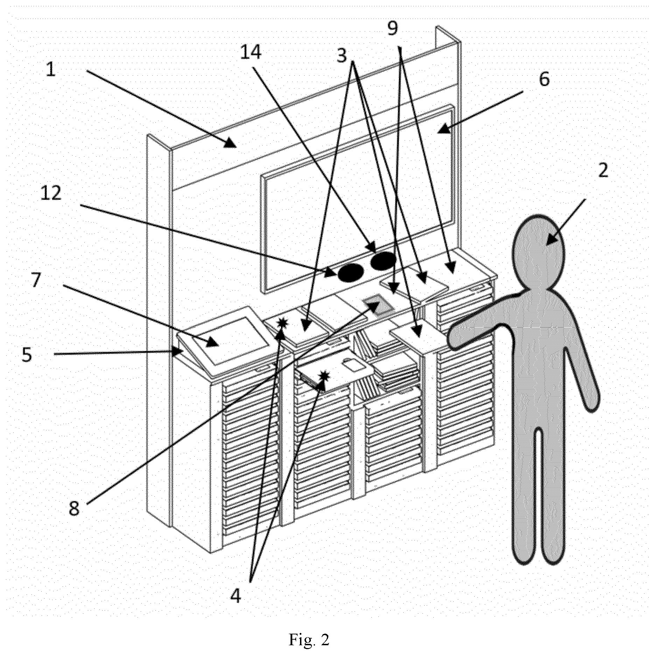

An example of the device is shown schematically in Fig. 1 and Fig. 2. The device consists of a display 1 on which there are objects 3 with markers 4. The device further comprises at least one control system 5 comprising a microcontroller and/or a computer and/or a logic unit and at least one display 6. The control system 5 has implemented software 11 (not visible in Fig. 2). Optionally, the device comprises an auxiliary screen 7, a graphic code reader/s 8 and/or an RFID tag reader/s 9. The device may comprise an optical system 14 and/or a vision system equipped with a camera/s 12.

The display 1 may have any required shape, e.g. rectangular. Objects 3, e.g. products, samples, samples, are placed on the display 1 or its vicinity. Objects 3 contain or are associated with appropriate tags 4. The graphic code reader(s) 8, the RFID tag reader(s) 9, the optical system 14, the vision system 12 are connected by signal to the control system 5, which may be a computer, or a logical unit or a distributed control system. Signals or information from sensors 8 and/or 9 and/or optical system 14 and/or vision system with camera( s) 12 are processed in control system 5 on the basis of programmed algorithm 11, and then the processed data are sent to display screen 6, where they are presented in the form of appropriate information, such as, for example, visualizations using one or more objects 3 which have been placed in a defined area or read by readers 8 and/or 9 and/or optical system 14 and/or vision system 12.

In one embodiment, the device has a vision system comprising one or more cameras 12 oriented to a defined area, which, in conjunction with an appropriately programmed control system 5, recognize individual objects 3. Such vision systems and algorithms for recognizing objects are known in the art.

In another embodiment, the device has an optical system 14 oriented to a defined area, which, in conjunction with an appropriately programmed control system 5, recognizes individual objects 3 on the basis of their characteristic features or markers placed on them.

In another example, it is a system comprising graphic code readers 8 detecting and recognizing graphic tags 4 placed on individual objects 3. The tag may be, for example, a bar code or a QR code or another graphic code.

In another example, it is a system based on radio frequency identification technology implemented so as to detect and recognize objects 3 individually. In the prior art, there are known tags 4 and radio readers 9 that can implement such a system. For example, these may be RFID tags and readers.

Optionally, the device may include an auxiliary screen 7, e.g., a touch screen, which may perform additional required functions or interactions with the user 2.

Optionally, the device may include a communication module or modules 10 such as Wi-Fi , a short-range radio module, e.g. Bluetooth^{®} , a longer-range radio module, e.g. GPRS, or another Internet or network access module or another data bus. The communication module is connected to the control system 5, which, via this module, sends data to the outside and receives external data, e.g. from and to an external server 13, or enables communication between subsequent displays and/or subsequent types of displays.

The control system 5, which may also be a computer or a logical unit, has implemented software 11 which, on the basis of signals from the sensor(s) 8 and/or reader(s) 9 and /or vision system 12 and/or optical system 14, generates or downloads from an external server 13 a visualization presenting the arrangement of, for example, rooms using one or more objects 3 selected by the user 2 and placed in the display 1.

Fig. 2 shows the interaction of the user 2 by putting the object 3 on the shelf of the display 1. Below the main display 6 there is an auxiliary display 7, e.g. a touch screen. Inside the display 1 there is a control system 5 and a communication module 10. On the display 1 there is also a graphic code reader 8 and/or an RFID reader 9 and/or a vision system 12 and/or an optical system 14. The device can be implemented as a system of separate displays 1 connected by wire or communicating wirelessly. Such a system can be equipped with one or more common displays 6. A system of multiple displays 1 can also be operated by one control system 5.

The device operates as described below.

First, there is an action by the user 2, resulting from interest in the sample or specimen of the exhibited object 3, depending on the implementation of the display 1, consisting of, for example: placing the object/s 3 in a defined area on the display containing the sensor/s 8 and/or reader/s 9. The sensor/s 8 and/or reader/s 9 transmit information from the markers 4 placed in the objects 3 to the control system 5. A distributed system may be used, where auxiliary control systems exist between the main control system. The exchange of information between the control systems may take place both wired and wirelessly.

In another complementary or alternative variant, the recognition of the object(s) 3 selected by the user 2 is performed by a vision system, e.g. camera(s) 12 in connection with a control system 5 comprising software 11.

In another complementary or alternative variant, the recognition of the object(s) 3 selected by the user 2 is performed by the optical system 14 in combination with the control system 5 comprising software 11.

The control system 5, based on the programmed algorithm 11, can perform the following exemplary tasks or functions.

Automatically prepares a visualization in the form of a film, photo or animation presenting an object or a fragment of an object 3, the sample of which is of interest to the user 2, e.g. if the display 1 contains countertop samples, it prepares a visualization of the room in which the product in the form of a countertop is placed. The visualization is displayed on one or more displays 6.

In other implementations, e.g. where display 1 contains furniture board decors, rooms are displayed in which furniture is made of the observed product or its sample. In the case of display 1 containing different types of objects 3 in the form of products, all products of interest are changed in the displayed visualization. For example, if the user is interested in countertops, the countertops change in the visualization, when the user observes wall panels, the walls change. The activity is performed automatically - when the user places in a defined area or reads the sample, the visualization is updated accordingly. This functionality acts as a "virtual designer" allowing the user to visualize the product in sample implementations or create one visualization from different types of products, e.g. when the displays contain different types of products.

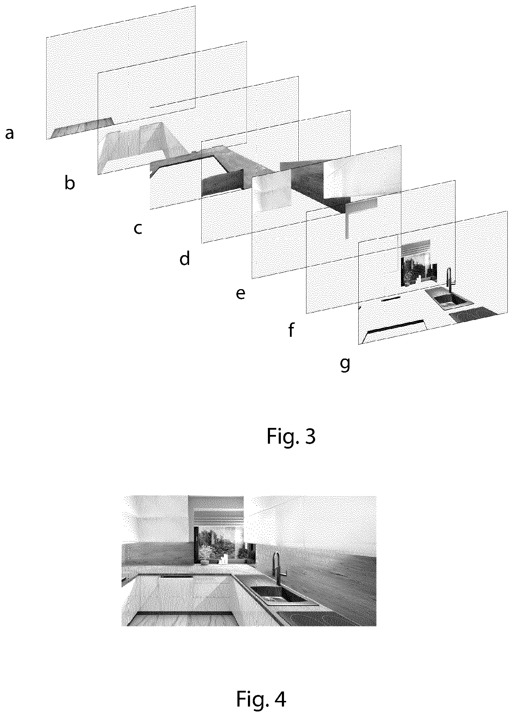

The way of creating the result graphics and visualizations is important. In order to save work in preparing graphics and to improve the display system - generating images, the result graphics h) were divided into several layers or image fragments, where each layer presents individual objects 3, i.e. templates. For example, as shown in Fig. 3, it can be divided into seven layers or image fragments, where:
a) a layer or part of the floor,
b) layer or fragment of lower fronts,
c) a layer or fragment of countertops,
d) layer or part of the filling,
e) layer or fragment of upper fronts,
f) a layer or part of the walls,
g) layer or fragment of decoration.

Fig. 4 shows the resulting graphic h), which was created by superimposing layers a) - g).

This allows for quick generation of visualizations by replacing layers or image fragments that have been converted to new patterns or reducing the number of created base images with visualizations, because the software itself generates the resulting images either in the control system 5 or on an external server 13. For example, if the display contains 20 types of floors, 30 types of countertops and 30 types of fronts, then if the system loaded previously prepared base graphics, 18,000 of them would be needed. In the presented solution, 80 base graphics are enough.

The method of presenting and visualizing objects according to the invention consists in providing a display 1, which in various variants has been described above, and then
a) user 2 places one or more objects 3 on one or more displays 1,
b) recognition of the object 3 by the sensor(s) 8 and/or reader(s) 9 and/or vision system 12 and/or optical system 14,
c) transferring information about an object or multiple objects 3 to the control system 5 or an external server 13,
d) processing information about an object or multiple objects 3 in the control system 5 by software 11 or downloading it from an external server 13,
e) visualization of processed information on display(s) 6,

In another variant, the method may consist in providing an additional touch screen 7, which comprises an interface allowing the user 2 to communicate with the control system 5 and the software 11. In this method, in step f), the user 2, by means of the touch screen interface 7, sends his/her messages and receives messages generated by the software 11 of the microcontroller 5, and may also influence steps c) and d), e.g. by influencing the generated visualizations.

In the method according to the invention, the recognition of an object 3 on the display is carried out by a vision system comprising one or more cameras 12 oriented to a defined area, which, in connection with an appropriately programmed control system 5, recognize individual objects 3. Such vision systems and algorithms for recognizing objects are known in the state of the art. In another example, for recognizing an object 3, a system is provided comprising a graphic code reader 8 for detecting and recognizing tags 4 placed on individual objects 3. The tag may be, for example, a bar code or a QR code or another graphic code.

In another example, for recognizing an object 3, a system is provided comprising optical sensors 14 for detecting and recognizing markers 4 or characteristics of individual objects 3.

In another example, a system based on radio frequency identification technology is provided for recognizing an object 3. For example, these may be RFID tags 4 and RFID readers 9.

In another example of the method, a display 1 is provided comprising a wireless and/or wired communication system 10, and the signals generated by the software 11 and the microcontroller 5 are transmitted by radio to external systems comprising appropriate communication devices. The communication system 10 can also receive data transmitted to it from other, external devices. In this way, data flow is ensured between the device and the external environment, or between other devices of the same or similar type.

The invention is used in the production of furniture, displays, advertising materials, points of sale and in the broadly understood trade, marketing and merchandising.

## Claims

1. A device for presenting and visualizing objects, comprising at least one display (1) intended to accommodate one or more objects (3); at least one control system (5) comprising a microcontroller and/or a computer and/or a logic unit, with implemented software (11), to which at least one sensor or reader (8), (9), (12), (14) of an object (3) and at least one display (6) are connected, **characterized in that** it comprises a system for detecting the presence of objects (3) in the display (1) implemented by a system of optical sensor( s) (14) connected to the control system (5) and/or a vision system comprising a camera(s) (12) oriented towards the display (1) with the object( s) (3) and/or a reader(s) of graphic codes (8) and/or an RFID reader(s) (9) contained in the display (1) and the corresponding tags (4) contained in or on the objects (3) and **in that** it comprises software (11) implemented in the control system (5) which is connected to at least one display (6), wherein the software (11) is configured to generate images of objects (3) or parts thereof on display(s) (6) and/or other information and visualizations related to said object (3).

2. A device according to claim 1, **characterized in that** the display (1) additionally comprises a touch screen (7) with an implemented user interface, which is connected to the control system (5).

3. A device according to claim 1 or 2, **characterized in that** the object presence detection system is implemented by a graphic code sensor (8) and a marker (4) located on the object (3), wherein the marker is a barcode or a QR code or another graphic code.

4. A device according to claim 1 or 2 or 3, **characterized in that** the object presence detection system is implemented by an optical sensor(s) (14) and a marker (4) located on the object (3) or based on a characteristic feature of the object (3).

5. A device according to claims 1 to 4, **characterized in that** the object presence detection system is implemented by a radio reader (9) and a radio tag (4) located on/in the object (3), preferably in an RFID system.

6. A device according to any one of claims 1 to 5, **characterized in that** it comprises a communication module (10) connected to the control system (5).

7. A device according to any one of claims 1 to 6, **characterized in that** the software (11) comprises an image base comprising a plurality of layers (a) - g)) or a plurality of image fragments of the resulting graphics (h)), wherein each layer (a) - g)) or image fragment comprises an image or an image fragment of a single object (3).

8. A device according to any one of claims 1 to 7, **characterized in that** the software (11) connects via a communication module (10) to an external server (13) containing an image base comprising a plurality of layers (a) - g)) or a plurality of image fragments of the resulting graphics (h)), wherein each layer (a) - g)) or image fragment contains an image or an image fragment of a single object (3), and
the software (11) downloads parts of the resulting graphics or the entire visualization generated on an external server (13).

9. A method of presenting and visualizing objects, wherein a display (1) is provided, comprising at least one control system (5) comprising a microcontroller and/or a computer and/or a logic unit, with implemented software (11) to which at least one sensor or reader (8), (9), (12), (14) of the object (3) is connected, and at least one display (6), **characterized in that** a system for detecting the presence of objects (3) in the display (1) is provided, implemented by a system of optical sensor(s) (14) and/or vision system(s) connected to the control system (5) comprising a camera (12) oriented towards the display (1) with the object(s) (3) and/or reader(s) (8), (9) contained in the display (1) and markers (4) contained in/on the objects (3) , and **in that** it comprises software (11) implemented in the control system (5), which is connected to at least one display (6) at the same time as the display (1) is connected to the control system (5), and the display (1) is connected to the control system (5), and the display (1) is connected to the control system (5), and the display (1) is connected to the control system ( 5 ), and the display (1) is connected to the control system (5), and the display (1) is connected to the control system (5), and the markers (4) contained in/on the objects (3), and **in that** the display (1) is connected to the control system (5), and the markers (4) contained in/on the objects (3), and **in that** the display (11) is implemented in the control system (5), which is connected to at least one display (6), and **in that** the display (6) is connected to the control system (5), and the markers (4) are ... wherein the software (11) is configured to generate images containing the objects (3) and/or parts thereof on the display(s) (6) and/or download from an external server (13), wherein in the following steps:
a. the user (2) places one or more objects (3) on one or more displays (1),
b. sensors and/or readers (8), (9) and/or vision system (12) and/or optical system (14) recognize the object (3),
c. the recognized data about an object (3) or multiple objects (3) are sent to the control system (5) or to an external server (13),
d. data about an object (3) or a plurality of objects (3) are processed in the control system (5) by software (11) or on an external server (13) by software (11) and sent to the control system (5),
e. the processed data is sent to at least one display (6) which displays visualization image( s ) containing an image(s) or image fragment of the object (3) and/or other information and visualizations related to said object (3).

10. Method according to claim 9, **characterized in that** an additional touch screen (7) is provided, which comprises an interface allowing communication between the user (2) and the microcontroller (5) and the software (11), and the method comprises a further step (f) in which the user (2) uses the touch screen interface (7) to send his/her messages and receives the messages generated by the software (11) of the microcontroller ( 5), and optionally influences the steps (d) and (e) and the generated visualizations.

11. A method according to claim 9 or 10, **characterized in that** the recognition of the object (3) on the display (1) is performed by a vision system comprising one or more cameras (12) oriented to a defined area of the display (1) and software implemented in the control system (5).

12. Method according to claims 9 to 11, **characterized in that** for recognizing an object (3) a system is provided comprising a graphic code sensor(s) (8) detecting and recognizing markers (4) placed on the individual objects (3), preferably the marker (4) is a barcode or a QR code or another graphic code.

13. A method according to claims 9 to 12, **characterized in that** a system is provided for recognizing an object (3) comprising an optical sensor(s) (14) for detecting and recognizing markers (4) placed on individual objects (3) or characteristics of said objects.

14. Method according to claims 9 to 13, **characterized in that** a system based on radio frequency identification is provided for recognizing the object (3), preferably the radio frequency identification is carried out by means of tags (4) and RFID readers (9).

15. A method according to any one of claims 9 to 14, **characterized in that** a display (1) is provided further comprising a communication circuit (10), and the signals generated by the software (11) and the control circuit (5) are transmitted to external or internal devices or circuits comprising appropriate communication devices , the communication circuit (10) in turn receiving signals transmitted to it from other, external or internal communication devices and then transmitting them to the microcontroller (5).
